# EUROPEAN PATENT APPLICATION

(11) **EP 1 378 344 A1**
(43) Date of publication of application: **07.01.2004**
(21) Application number: 02705330.5
(22) Date of filing: 19.03.2002
(51) Int. Cl.: B32B 15/08, C08J 5/18, C08L 67/02, B65D 8/16

(54) **METAL SHEET COATED WITH THERMOPLASTIC RESIN AND CAN OBTAINED THEREFROM**

(30) Priority: 21.03.2001 JP 2001081239; 02.11.2001 JP 2001338533
(71) Applicant: Toyo Kohan Co., Ltd., Tokyo 102-8447 (JP)
(72) Inventor: HU, Lianchun, c/o TOYO KOHAN CO., LTD., Kudamatsu-shi, Yamaguchi 744-8611 (JP); KAWAMURA, Satoshi, c/o TOYO KOHAN CO., LTD., Kudamatsu-shi, Yamaguchi 744-8611 (JP); MAIDA, Narimasa, c/o TOYO KOHAN CO., LTD., Kudamatsu-shi, Yamaguchi 744-8611 (JP); KURODA, Hitoshi, c/o TOYO KOHAN CO., LTD., Kudamatsu-shi, Yamaguchi 744-8611 (JP)
(74) Representative: VOSSIUS & PARTNER
(86) International application number: PCT/JP2002/002589
(87) International publication number: WO 2002/076729

(57) **Abstract**

A thermoplastic-resin-coated metal sheet in which the thermoplastic resin has been applied to the metal sheet without through an adhesive primer and which, even after having been formed into a can, is excellent in impact resistance at low temperatures and resistance to corrosion by acid contents; and a can obtained from the coated metal sheet. The thermoplastic-resin-coated metal sheet is obtained by coating a metal sheet with a thermoplastic resin composition comprising a blend of a polyester resin with a polyolefin resin or polyolefin elastomer. This metal sheet is formed into a can through drawing/ironing with thickness reduction.

## Description

### Technical Field

The present invention concerns a thermoplastic resin-coated metal sheet and, particularly, a thermoplastic resin-coated metal sheet in which the coating resin is excellent in impact resistance at low temperature, as well as a can obtained by forming the same.

### Background Art

In recent years, cans formed by coating a polyester resin on a metal sheet and improved with thickness reduction ratio for side wall portions by applying severe forming such as thickness-reducing drawing or thickness-reducing ironing have been used as cans mainly for drink applications. In a case of forming a polyester resin coated metal sheet by applying severe such as wall reducing drawing or wall reducing ironing, it is necessary to coat in a non-orientation state capable of attaining excellent fabricability such that the resin is not peeled upon forming or cracks are not formed to the resin.

However, when applying thickness-reducing drawing or thickness-reducing ironing is applied to a resin-coated metal sheet with a non-orientation state of a polyester resin, then applying coating printing to the outer surface of the can and heating for baking, since the upper portion of the can is thermally set in a state where it is molecularly oriented in the direction of a height of the can by the fabrication, elongation of the not oriented resin in the circumferential direction of the can is extremely small to become brittle. Particularly, cracks tend to be formed to the resin layer by mere collision between cans to each other, particularly, at low temperature. Further, since the portion for the can bottom scarcely undergoes the forming, the resin crystals are grown into a coarse state and brittled upon heating for baking after the coating printing also tending to cause cracks upon receiving impacts particularly at low temperature.

That is, a polyester resin-coated metal sheet in a non-orientation state is poor in the impact resistance, particularly, the impact resistance at low temperature after formed into the can.

Poor impact resistance after forming can be improved by interposing an adhesive primer between the polyester resin and the metal sheet upon coating the polyester resin on the metal sheet. However, a method of interposing the adhesive primer may possibly cause undesired effects on the environment due to evaporation of organic solvents and, further, requires surplus steps of coating and drying to increase the cost. Further, in a case where acidic contents at pH of 5 or less are filled, the underlying metal sheet may sometimes be corroded in the upper portion of the can undergoing high degree of fabrication after lapse of a long time.

The present invention intends to provide a thermoplastic resin-coated metal sheet in which a resin layer, after applying severe forming to a thermoplastic resin-coated metal sheet where the resin layer after coating to the metal sheet is in a non-oriented state, is excellent in impact resistance, particularly, impact resistance at low temperature, coated to the metal sheet without interposing an adhesive primer and is excellent in corrosion resistance to acidic contents even in a case where it is formed into a can, as well as a can using the same.

### Disclosure of the Invention

According to the present invention, it is provided a thermoplastic resin-coated metal sheet in which a thermoplastic resin composition comprising a blend of one or more of polyester resins and at least one polyolefin ingredient selected from the group consisting of polyolefin resins and polyolefin elastomers is coated on at least one surface of a metal sheet in a substantially non-orientation state.

Further, according to the present invention, a can using a thermoplastic resin-coated metal sheet is provided.

That is, in the present invention, as the polyolefin ingredient in the thermoplastic resin composition forming the coating layer, a polyolefin resin, a polyolefin elastomer, or a combination of a polyolefin resin and a polyolefin elastomer can be used.

Further, a polyolefin resin layer formed substantially in a not-yet oriented state can be disposed above the coating layer of the thermoplastic resin composition or in the lower layer to the coating layer (surface of metal sheet).

In the thermoplastic resin composition used in the present invention, it is preferred that the ratio of a melt viscosity upon heat melting the polyolefin ingredient (polyolefin resin or polyolefin elastomer, or a combination of the polyolefin resin and a polyolefin elastomer) (VPOL) and the melt viscosity upon heat melting the polyester resin (VPES), that is, VPOL/VPES is 1.2 or less.

The polyolefin resin used as the polyolefin ingredient in the present invention is preferably a resin comprising one or more of 1-alkene polymer resins having a number of carbon atoms of 2 to 8, and the 1-alkene polymer resin is preferably one of polyethylene, polypropylene and ethylene-propylene copolymer. Further, as the polyolefin resin, a polyolefin resin polymerized by a metallocene catalyst can also be used. Further, a modified polyolefin resin modified with one of maleic acid hydride, acrylic acid, acrylic acid ester, or diglycidyl methacrylate may be used also as the polyolefin resin.

Further, as the polyolefin elastomer used for the polyolefin ingredient, an in-plant produced ethylene-propylene copolymerized elastomer with a melt flow rate (MFR, 230°C) of from 0.4 to 30 (g/10 min) is suitable.

In the present invention, the polyester used for the thermoplastic resin composition is a polyester resin comprising ester repetitive units of at least one of ethylene terephthalate, ethylene isophthalate, ethylene naphthalate, ethylene adipate, butylenes terephthalate, butylene isophthalate, butylene naphthalate and butylene adipate, with the intrinsic viscosity being preferably from 0.5 to 1.5 and, particularly, ethylene terephthalate/ethylene isophthalate copolymer or polybutylene terephthalate is preferred.

The polyester resin in the polyester resin layer capable of forming in an upper layer or a lower layer to the coating layer of the thermoplastic resin composition is preferably ethylene terephthalate/ethylene isophthalate copolymer.

Further, the thermoplastic resin composition preferably contains 1 to 30% by weight of the polyolefin ingredient and preferably contains 70 to 95% by weight of the polyester resin.

The thermoplastic resin-coated metal sheet according to the present invention is produced by heat melting a thermoplastic resin composition, directly extruding the same from a T-die onto a metal sheet for coating, or heat melting a thermoplastic resin composition, extruding the same from a T-die to a casting roll, cooling to solidify the same into a film and then hot press bonding the film on the metal sheet.

In the thermoplastic resin-coated metal sheet according to the present invention, it is preferred that the olefin ingredient in the coating layer comprised of the thermoplastic resin composition is present being dispersed with a size of 1 to 10 µm in the extruding direction of the resin and 0.1 to 2 µm in the direction perpendicular to the resin extruding direction.

Further, in the thermoplastic resin-coated metal sheet , the metal sheet is preferably one of electrolytic chromic acid treated steel sheet, tin-plated steel sheet or aluminum alloy sheet.

### Best Mode for Practicing the Invention

The present invention provides a thermoplastic resin-coated metal sheet having a coating layer of a thermoplastic resin composition comprising a blend of a polyester resin and a polyolefin ingredient (at least one member selected from the group consisting of polyolefin resins and polyolefin elastomers) at least on one surface of a metal sheet and, optionally, a polyester resin layer formed to an upper layer and/or lower layer of the coating layer, as well as a can obtained by forming the same, and the resin layer is excellent in impact resistance and, particularly, impact resistance at low temperature and also excellent in corrosion resistance to acidic contents even in a case of coating a thermoplastic resin coating without interposing an adhesive primer to a metal sheet and applying severe forming such as thickness reducing-drawing or thickness-reducing ironing.

The present invention is to be described specifically.

In the thermoplastic resin composition comprising the blend of the polyester resin and the polyolefin ingredient, a polyolefin resin and a polyolefin elastomer are used as the polyolefin ingredient each alone or in combination.

In the polyolefin ingredient and the polyester resin, it is preferred that the ratio of the melt viscosity in a case of melting the respective resin pellets is in a predetermined range. That is, it is preferred that VPOL/VPES is 1.2 or less where VPOL represents the melt viscosity upon heat melting of the polyolefin ingredient (polyolefin resin, polyolefin elastomer or a combination of both of them) and VPES represents a melt viscosity upon heat melting of polyester resin. The reason will be described below.

The coating layer of the thermoplastic resin composition (heareinafter sometimes simply referred to as a thermoplastic resin film) is formed by heat melting resin pellets and extruding the blended resin from a T-die of an extruder directly onto a long strip-like metal sheet unwound from an uncoiler, or heat melting a resin heat melted from a polyester resin pellets separately and heat melted and blended resin from respective separate extruders, then coextruding them from a T-die having a plurality of die nozzles directly onto a long and strip-like metal sheet unwound from an uncoiler, and pressing the same by pressing rolls to a metal sheet. Alternatively, it is formed by extruding a heat melted resin in the same manner as described above from a T-die of an extruder onto a casting roll, cooling to solidify the same to form a film, then abutting the film against the heated long strip-like metal sheet which is unwound from an uncoiler and heated, and press bonding by sandwiching the same between a pair of laminate rolls by using an known laminater. In each of the preparation method, when the molten resin is extended downwardly, that is, in the longitudinal direction when the heat melted blend resin is extruded from the T-die onto the metal sheet or the casting roll, since the molten resin is stretched downwardly, that is, in the longitudinal direction gravitationally, anisotropy occurs although little in the resin film. In a case where VPOL/VPES exceeds 1.2, anisotropy of the film of the blend resin increases to lower the rigidity of the film in the lateral direction compared with that of the longitudinal direction, and tend to cause lateral cracking upon exertion of impact after coating to the metal sheet. With a view point described above, it is preferred that VPOL/VPES is 1.2 or less.

The polyolefin resin used as the polyolefin ingredient can include resins comprising one or more of 1-alkene copolymer resins with a number of carbon atoms of 2 to 8. The 1-alkene copolymer resin with the number of carbon atoms of 2 to 8 can include, for example, low density polyethylene, medium density polyethylene, high density polyethylene, polypropylene, polybutene-1, polypentent-1, polyhexene-1, polyheptene-1, polyoctene-1, ethylene-propylene copolymer, ethylene-1-butene copolymer, and ethylene-hexene copolymer. Among them, in-plant produced ethylene-propylene copolymer is preferred. Further, as the polyolefin resins, use of a polyolefin resin by a metallocene catalyst is preferred since it forms less oligomers that may give effects on the flavor of contents.

Further, modified polyolefin resins formed by modifying the polyolefin resin, for example, polyethylene or polypropylene, for example, with one of maleic acid anhydride, acrylic acid, acrylic acid ester, acrylic acid ionomer, and diglycidyl methacrylate may also be used. The modified polyolefin resin blended at a ratio of 1 to 100% by weight to the not-modified polyolefin resin is used preferably as the polyolefin resin since the polyolefin ingredient is finely dispersed in the polyester resin.

As the polyolefin elastomer, use of an ethylene-propylene copolymer elastomer having a melt flow rate (MFR, 230°C) of 0.4 to 30 (g/10 min), particularly, 0.8 to 25 g/10 min is preferred. In a case where MFR is less than the range described above, the melt viscosity is excessively higher relative to the polyester resin when the resin is heat melted and the grains of the polyolefin resin dispersed in the polyester resin is grown excessively to deteriorate the impact resistance. On the other hand, in a case where it exceeds the range described above, the impact resistance of the polyolefin elastomer per se is poor, and the resin blended with the polyester resin is also poor in the impact resistance. Further, it is preferred that the ethylene - propylene copolymer elastomer is in-plant produced.

The blending ratio of the polyolefin ingredient to the thermoplastic resin composition (polyolefin ingredient content in the thermoplastic composition) is preferably 1 to 30% by weight. In a case where the amount of the polyolefin ingredient is small, the thermoplastic resin composition after coating on the metal sheet lacks in the impact resistance. In a case where the amount of the polyolefin ingredient is unnecessarily large, the transparency of the thermoplastic resin composition decreases to make the anisotropy larger and the hardness is also decreased, so that the resin surface tends to be injured.

As the polyester resin which is blended with the polyester resin to form a thermoplastic resin composition, those comprising ester repetitive units of at least one of ethylene terephthalate, ethylene isophthalate, ethylene naphthalate, ethylene adipate, butylenes terephthalate, butylenes isophthalate, butylenes naphthalate and butylenes adipate can be used alone or as a blend of two or more them. Further, it is also possible to use those other than described above that use sebasic acid, trimellitic acid or azelaic acid as the acid ingredient for the ester unit, or those of three or more carbon atoms, for example, propylene glycol, diethylene glycol, neopentyl glycol, and pentaerythritol as the alcohol ingredient for the ester unit.

In the present invention, ethylene terephthalate/ ethylene isophthalate copolymer or polybutylene terephthalate is used suitably as the polyester resin. Particularly, a polyester resin comprising 5 to 15 mol% of ethylene isophthalate and 85 to 95 mol% of ethylene terephthalate is excellent in fabricability and cause no cracks in the resin layer even when severe forming such as thickness-reducing drawing is applied after blending with the polyolefin ingredient and lamination onto the metal sheet and is also excellent in adhesion with the metal sheet. Further, in a case where it is in contact with contents filled in the can, it does not deteriorate flavor or taste of the contents and show favorable flavor property.

Further, polybutylene terephthalate is easily mixed with the polyolefin ingredient (particularly, polyolefin resin) and in a case where it is blended, for example, with a polyolefin resin, the polyolefin resin is dispersed more finely in the blend resin, which is effective for the improvement of the impact resistance and the fabricability. Further, polybutylene terephthalate has high crystallization rate and in a case where a coated metal sheet having a coating layer of a thermoplastic resin composition is formed into a can and then the can is heated, for example, by outer surface coating, it has a feature of suppressing the grow of brittle and cause crystals. Accordingly, use of polybutylene terephthalate is extremely effective for the improvement of the impact resistance at low temperature as an object of the present invention. In addition, a thermoplastic resin composition blended with polybutylene terephthalate is excellent in water degradation resistance (hydrolysis resistance), and the can having the coating layer comprising the thermoplastic resin composition shows less lowering of the molecular weight of the resin even when left for long time with aqueous contents being filled therein and, accordingly, can maintain stable favorable impact resistance for a long time.

In the present invention, since it is on the premise that the thermoplastic resin composition comprising a blend of the polyester resin and the polyolefin ingredient described above is used in a non-orientation state excellent in the fabricability in order to enable severe fabrication such as thickness-reducing drawing or thickness-reducing drawing and ironing without causing cracking, chipping, scraping and peeling of the resin, it is necessary to increase the intrinsic viscosity of the resin and strengthen the resin. Accordingly, the intrinsic viscosity of the polyester resin preferably ranges from 0.5 to 1.5 and, more preferably, ranges from 0.8 to 1.2. In a case where polyester resin with an intrinsic viscosity of less than 0.5 is used, the strength of the resin is lowered extremely making it difficult for application use of thickness reduced drawn can or thickness reduced drawn and ironed can. In addition, flavor property of contents tends to be deteriorated. On the other hand, in a case where the intrinsic viscosity of the resin exceeds 1.5, melt viscosity upon heat melting the resin increases extremely making it extremely difficult for the operation of coating the thermoplastic resin composition on the metal sheet.

The blend ratio of the polyester resin to the thermoplastic resin composition (content of the polyester resin in the thermoplastic resin) is preferably from 70 to 95% by weight. In a case where the amount of the polyester resin is small, the transparency is reduced and the anisotropy increases in the thermoplastic resin composition and, further, 'the hardness is decreased as well, so that the resin surface tends to be injured. Further, if the amount of the polyester resin is unnecessarily large, the transparency is reduced and the anisotropy increases in the thermoplastic resin composition and, further, the hardness is decreased as well, so that the resin surface tends to be injured.

Particularly, in a case where the ethylene terephthalate/ethylene isophthalate copolymer described above is used as the polyester resin, when the blend ratio is less than 70% by weight, the fabricability of the thermoplastic resin composition after coating on the metal sheet is poor, whereas when the blend ratio exceeds 95% by weight, dispersed particles of the polyolefin ingredient in the resin composition become coarser, causing a worry of deteriorating the impact resistance and the workability. Further, in a case where polybutylene terephthalate described above is used as the polyester resin, when the blend ratio is less than 70% by weight, the dispersed particles of polyolefin ingredient in the resin composition become coarser making it difficult to obtain a sufficient impact resistance. When the blend ratio exceeds 95% by weight, the resin layer is clouded to deteriorate the appearance by heating of the can such as outer surface coating after forming the resin coated metal sheet into a can. Accordingly, it is most suitable in the present invention that the ethylene terephthalate/ethylene-isophthalate copolymer and polybutylene terephthalate is used together such that the total amount is within the range of the blend ratio described above.

In the present invention, a polyester resin layer can be formed for the upper layer and/or lower layer to the coating layer comprising the thermoplastic resin composition described above and a coating of a two-layered or three-layered structure as a whole can be formed on at least one surface of the metal sheet.

As the polyester resin for forming the upper layer or the lower layer, the same polyester resin as used in the formation of the thermoplastic resin composition can be used, and ethylene terephthalate/ethylene isophthalate copolymer is suitable since this is excellent in the flavor property to contents and the fabricability and is also excellent in the adhesion to the metal sheet as described previously. In the copolymer described above, a copolymer comprising 3 to 15 mol% of ethylene isophthalate and 85 to 97 mol% of ethylene terephthalate is preferred for the upper layer, and a copolymer comprising 10 to 25 mol% of ethylene isophthalate and 75 to 90 mol% of ethylene terephthalate is preferred for the lower layer.

Further as described above, the resin coating in the thermoplastic resin-coated metal sheet according to the present invention has a coating layer of a thermoplastic resin composition at least comprising a polyester resin and a polyolefin ingredient and includes a case where the coating layer comprises a single-layered structure, a case of a 2-layered structure in which the polyester resin layer is formed to either one of the upper layer or the lower layer of the coating layer and a case of a three-layered structure in which the polyester resin layer is formed to the upper layer and the lower layer of the coating layer. In the case of the single-layered structure comprising only the coating layer of the thermoplastic resin composition, the thickness is preferably within a range from 5 to 50 µm. In a case of the two-layered structure of the coating layer and the polyester resin layer, it is preferred that the thickness of the upper layer ranges from 3 to 15 µm, the thickness of the lower layer ranges from 2 to 47 µm and, further, the entire thickness ranges from 5 to 50 µm. In a case of the three-layered structure comprising the coating layer and the polyester resin layers, it is preferred that the thickness of the polyester resin layer for the upper layer ranges from 2 to 10 µm, the thickness of the coating layer as the intermediate layer ranges from 5 to 30 µm and the thickness of the polyester resin layer for the lower layer ranges from 3 to 10 µm.

The thermoplastic resin film constituting the resin coating described above may be formed by extruding a resin obtained by heat melting and blending resin pellets to be blended at a temperature higher by 20 to 40°C than the melting point of the polyester resin having the highest melting point among the resins to be used (about 200 to 300°C) from a T-die of an extruder directly onto a long strip-like metal sheet re-wound from a uncoiler, or heat melting a resin obtained by separately heat melting polyester resin pellets at a temperature higher by 20 to 40°C than the melting point and the heat melted and blend resin described above by separate extruders respectively, then co-extruding them from a T-die having a plurality of die nozzles directly on a long strip-like metal sheet unwound from an uncoiler, pressing them against the metal sheet by press bonding rolls and then quenching directly in water thereby preparing a thermoplastic resin film-coated metal sheet, or by extruding the heat melted resin in the same manner as described above from a T-die of an extruder onto a casting roll, cooling to solidify the same into a film, then re-winding from an uncoiler and abutting the film to a long strip-like metal sheet heated to a temperature higher by 20 to 40°C than the melting point of the polyester resin, press bonding them while sandwiching between a pair of laminate rolls by means of a known laminator and immediately quenching them in water thereby preparing a thermoplastic resin film-coated metal sheet. Further, in a case of application use not applied with severe forming as in the present invention, heat melted resin may be extruded from a T-die of an extruder onto a casting roll, then stretched in a uni-axial direction (longitudinal direction) or bi-axial direction (longitudinal direction and lateral direction) and then heat set to form a film in which crystal molecules are oriented, which may be laminated onto the metal sheet.

In the thermoplastic resin composition in which the polyester resin and the polyolefin ingredient are heat melted as described above (blend resin), the polyolefin resin or the polyolefin ingredient is finely dispersed in the matrix of the polyester resin. When the heat melted blend resin in this state is extruded from the T-die onto the metal sheet or the casting roll, the molten resin is gravitationally stretched downward although little. In this process, the polyolefin ingredient (polyolefin resin or polyolefin elastomer) dispersed finely in the matrix of the polyester resin is stretched in the direction of gravitational force and dispersed in the matrix of the polyester resin being dispersed in a fibrous state after the blend resin has been cooled to solidify to the metal sheet on the casting roll. In the dispersion state, when the resin coated metal sheet is applied with thickness-reducing drawing or thickness reducing drawing and ironing to form a can, a dispersed fibrous blend resin is sometimes visible with naked eyes. The fibrous blend resin is no more visible with naked eyes when it is 10 µm or less in the extruding direction and 2 µm or less in the direction perpendicular to the extruding direction when extruded from the T-die. Accordingly, it is preferred in the present invention that the olefin ingredient in the thermoplastic resin composition is present being dispersed with a size of 1 to 10 µm in the extruding direction of the resin (length in the film direction) and 0.1 to 2 µm in the direction perpendicular to the extruding direction of the resin (length in the lateral direction of the film) in the coating layer of the thermoplastic resin composition after preparing the thermoplastic resin-coated metal sheet.

As the substrate for the thermoplastic resin-coated metal sheet of the present invention, various kinds of surface treated steel sheets such as electrolytic chromic acid treated steel sheet (tin free steel, hereinafter represented by TFS) or tin-plated steel sheet (tin sheet hereinafter represented by tin sheet), and aluminum alloy sheet which are usually used generally as materials for cans can be used. For the surface treated steel sheets, TFS having, on a steel sheet, a 2-layered film comprising a lower layer composed of metallic chromium in a membrane amount of 10 to 200 mg/m² and an upper layer composed of chromium hydrate oxides in a membrane amount of 1 to 30 mg/m² based on the chromium content is preferred, which has a sufficient adhesive property with the thermoplastic resin film according to the present invention and also has corrosion resistance. Preferred film sheets are those obtained by applying plating in a plating amount of 0.1 to 11.2 g/m² on the surface of the steel sheet and, forming thereon, a 2-layered film comprising metallic chromium and chromium-hydrate oxides in an amount of membrane from 1 to 30 mg/m² based on chromium content, or forming a single layered film comprising only chromium hydrate oxides. In any of the cases, the steel sheets as the substrates is preferably a cold rolled low carbon steel sheet used generally as the material for cans. The thickness of the steel sheet is preferably from 0.1 to 0.32 mm. For the aluminum alloy sheet, JIS 3000 series or 5000 series is preferred, and preferred are those applied with an electrolytic chromic acid treatment to the surface to form a 2-layered film comprising a lower layer composed of metallic chromium in a film amount of 0 to 200 mg/m² and an upper layer comprising chromium hydrate oxides in a membrane amount of 1 to 30 mg/m² based on the chromium content, or those applied with a chromium phosphate treatment to deposit 1 to 30 mg/m² of a chromic ingredient based on the chromium content and 0 to 30 mg/m² of phosphoric ingredient based on the phosphorus content. The thickness of the aluminum alloy sheet is preferably from 0.15 to 0.4 mm.

### Example

The present invention is to be described more specifically by way of examples.

### Example 1

### (Specimen Nos. 1 - 6, 11 - 17, 26 - 32)

A long strip-like electrolytic chromic acid treated steel plate (hereinafter referred to as TFS) was re-wound at a rate of 150 m/min from an uncoiler, and pellets comprising a polyester resin shown in Table 1 (represented by PES in the table here and hereinafter), a polyolefin resin (represented by POL in the table here and hereinafter) and/or a polyolefin elastomer (represented by PEL in the table here and hereinafter), or only comprising the polyester resin were heat melted at a temperature higher by about 30°C than the melting point of the polyester resin while varying the kneading time by using an extruder to form a blend resin, then fed to a T-die and extruded from a die nozzle on one surface of TFS, that is, one surface to be an inner surface of a can (represented by inner surface in the table herein and hereinafter). Simultaneously, pellets of a polyester resin incorporated with 20% by weight of white titanium oxide shown in Table 1 were heat melted at a temperature higher by about 30°C than the melting temperature of the polyester resin using an extruder, then fed into a T-die and extruded from the die nozzle on the other surface of TFS, that is, one surface to be an outer surface of the can (represented by outer surface in the table here and hereinafter). Then, after sandwiching the TFS to which the resin layer was extruded on both surface thereof by using a pair of press bonding rolls, they were directly quenched in water to prepare thermoplastic resin-coated metal sheets of Specimen Nos. 1 - 6, 11 - 17, 26 - 32 in Tables 2 and 3.

### (Specimen Nos. 18, 19)

A long strip-like tin sheet was re-wound from an uncoiler at a rate of 150 m/min and heated, and pellets of the polyester resin and the polyolefin resin shown in Table 1 were heat melted at a temperature higher by about 30°C than the melting point of the polyester resin while varying the kneading time by using an extruder to form a blend resin, the polyester resin shown in Table 1 was heat melted at a temperature higher by about 30°C than the melting point of the polyester resin by using a separate extruder, then they were fed to a T-die having two die nozzles and co-extruded on one surface of a tin sheet from the die nozzles such that the blend resin layer containing the polyolefin resin was in contact with the tin sheet. Simultaneously, pellets of the polyester resin incorporated with 20% by weight of white titanium dioxide shown in Table 1 was heat melted at a temperature higher by about 30°C than the melting point of the polyester resin by using an extruder, fed to a T-die and then extruded from the die nozzle to the other surface of the heated tin sheet to be an outer surface of a can. Then, sandwiching the tin sheet to which the resin layer was extruded on both surface thereof by using a pair of press bonding rolls and, they were directly quenched in water to prepare thermoplastic resin-coated metal sheets of Specimen Nos. 18 and 19 in Table 3.

### (Specimen Nos. 7 - 10, 20 - 23)

Pellets of the polyester resin and the polyolefin resin or polyolefin elastomer shown in Table 1 were heat melted at a temperature higher by about 30°C than the melting point of the polyester resin while varying the kneading time by using an extruder to form a blend resin, then fed into a T-die, extruded from a die nozzle, followed by trimming and taken-up to a coiler as a non-orientation film. Further, pellets of the polyester resin incorporated with 20% by weight of white titanium dioxide shown in Table 1 were heat melted at a temperature higher by about 30°C than the melting point of the polyester resin by using an extruder, fed into a T-die, extruded from a die nozzle, followed by trimming and then taken up as a non-orientation film to a coiler. Then, a long strip-like aluminum alloy sheet was re-wound at rate of 150 m/min from an uncoiler and heated, a blend resin film was abutted while being re-wound from the coiler to one surface to be an inner surface of a can and, at the same time, a white polyester film was abutted while being re-wound from the coiler to the other surface to be an outer surface of the can. Then, after sandwiching the aluminum alloy sheet to which the resin layer was extruded on both surface thereof by using a pair of press bonding rolls, they were directly quenched in water to prepare thermoplastic resin-coated metal sheets of Specimen Nos. 7 - 10 and 20 - 23 in Tables 2 and 3.

### (Specimen Nos. 24, 25)

Pellets of the polyester resin and the polyolefin resin shown in Table 1 were heat melted at a temperature higher by about 30°C than the melting point of the polyester resin while varying the kneading time by using an extruder to form a blend resin, the polyester resin shown in Table 1 was heat melted at a temperature higher by about 30°C than the melting point of the polyester resin by using a separate extruder, then fed into a T-dye having two die nozzles, co-extruded from the die nozzles, followed by trimming and then taken up as two layers of a non-orientation film to a coiler. Further, pellets of the polyester resin incorporated with 20% by weight of white titanium dioxide shown in Table 2 and 3 were heat melted at a temperature higher by about 30°C than the melting temperature of the polyester resin by using an extruder, fed into a T-die, extruded from the die nozzle, followed by trimming and then taken-up as a non-orientation film to a coiler. Then, a long strip-like tin sheet was re-wound at a rate of 150 m/min from an uncoiler, and heated, and the two-layered resin film was abutted against one surface thereof to be an inner surface of a can while being re-wound from the coiler such that the blend resin layer containing the polyolefin resin was in contact with the tin sheet. At the same time, the white polyester film was abutted, while being re-wound from the coiler to the outer surface of the can. Then, after sandwiching the tin sheet to which the resin layer was extruded on both surface thereof by using a pair of press bonding rolls, they were directly quenched in water to prepare thermoplastic resin-coated metal sheets of Specimen Nos. 24 and 25 in Table 3.

The metal sheets applied with the surface treatment shown below were used as the three types of the metal sheets described above.
(1) Electrolytic chromic acid treated steel sheet
(indicated as TFS in the table)
Sheet thickness : 0.18 mm
Amount of metallic chromium: 160 mg/m²
Amount of chromium hydrate oxide: (as chromium) 19 mg/m²
Heating temperature : temperature higher by about 30°C than the melting point of the polyester resin
(2) Tin sheet (indicated as ET in the table)
Sheet thickness : 0.18 mm
Amount of tin plating : 0.2 g/m²
Amount of chromium hydrate oxide: (as chromium) 9 mg/m²
Heating temperature : 200°C
(3) Aluminum alloy sheet (JIS 5052 H 39) (indicated as Al in the table)

| | |
|---|---|
| Sheet thickness | 0.26 mm |
| Amount of membrane | (as phosphorus) 11 mg/m² |
| | (as chromium) 7 mg/m² |
| Heating temperature | temperature higher by about 30°C than the melting point of the polyester resin |

As each of the polyolefin resins described above, polyolefin resins using metallocene catalysts were used for any of the cases.

**Table 1**

| Resin composition | |
|---|---|
| Resin No. | Resin Composition |
| PES1 | Polyethylene terephthalate (IV value: 0.75) |
| PES2 | Polyethylene terephthalate (IV value: 0.82) |
| PES3 | Polyethylene terephthalate (IV value: 1.1) |
| PES4 | Ethylene terephthalate - ethylene isophthalate copolymer (ethylene -isophthalate:: 5 mol%) (IV value: 0.9) |
| PES5 | Ethylene terephthalate - ethylene isophthalate copolymer (ethylene isophthalate:: 10 mol%) (IV value: 0.9) |
| PES6 | Ethylene terephthalate - ethylene isophthalate copolymer (ethylene isophthalate:: 15 mol%) (IV value: 1.5) |
| PES7 | Ethylene terephthalate - ethylene adiipate copolymer (ethylene adipate:: 10 mol%) (IV value :0.6) |
| PES8 | Ethylene terephthalate - ethylene naphthalate copolymer (ethylene -naphthalate: 10 mol%) (IV value: 0.9) |
| PES9 | Polybutylene terephthalate (IV value: 0.5) |
| POL1 | Polyethylene |
| POL2 | Polypropylene |
| POL3 | Polybutene-1 |
| POL4 | Polyoctene-1 |
| POL5 | Ethylene-propylene copolymer |
| POL6 | Ethylene-butene-1 copolymer |
| POL7 | Ethylene-hexene copolymer |
| POL8 | Maleic acid anhydride copolymerized polyethylene |
| POL9 | Acrylic acid copolymerized polypropylene |
| POL10 | Methylacrylate copolymerized polyethylene |
| POL11 | Diglycidyl methacrylate copolymerized polyethylene |
| PEL1 | Ethylene-propylene polymerized elastomer (MFR: 0.4 g/10 min) |
| PEL2 | Ethylene-propylene polymerized elastomer (MFR: 1 g/10 min) |
| PEL3 | Ethylene-propylene polymerized elastomer (MFR: 5 g/10 min) |
| PEL4 | Ethylene-propylene polymerized elastomer (MFR: 10 g/10 min) |
| PEL5 | Ethylene-propylene polymerized elastomer (MFR: 30 g/10 min) |
| PEL6 | Ethylene-propylene polymerized elastomer (MFR: 35 g/10 min) |

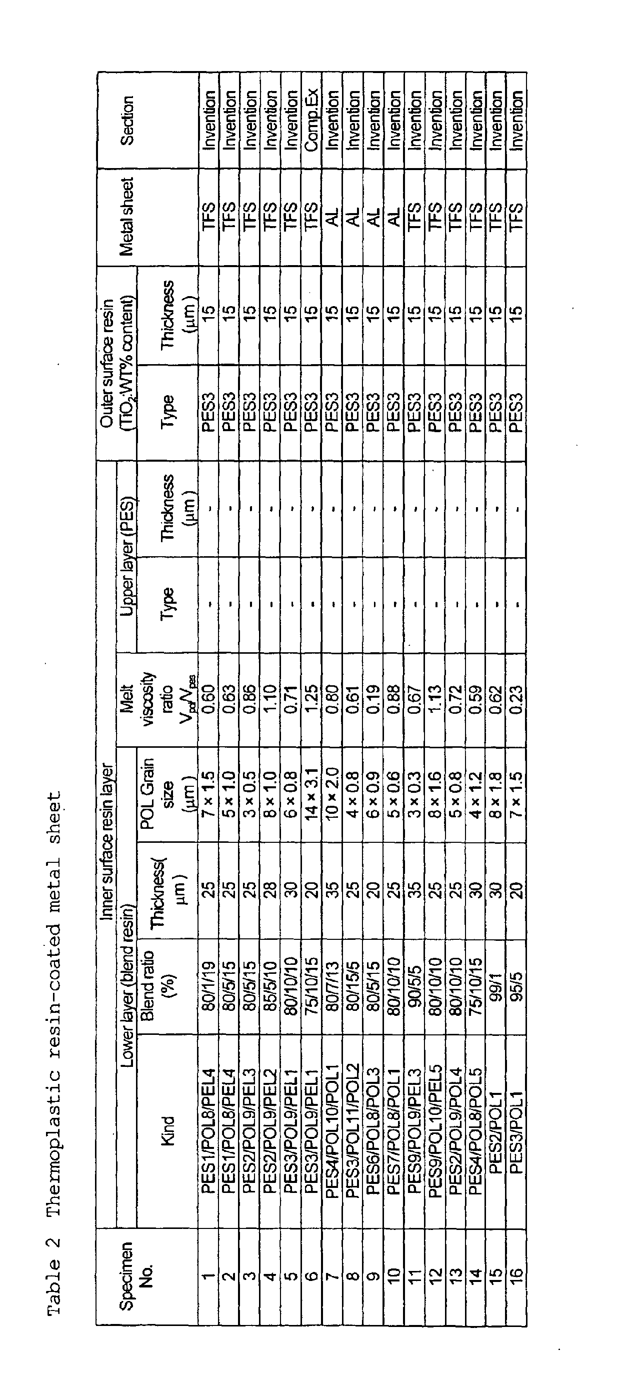

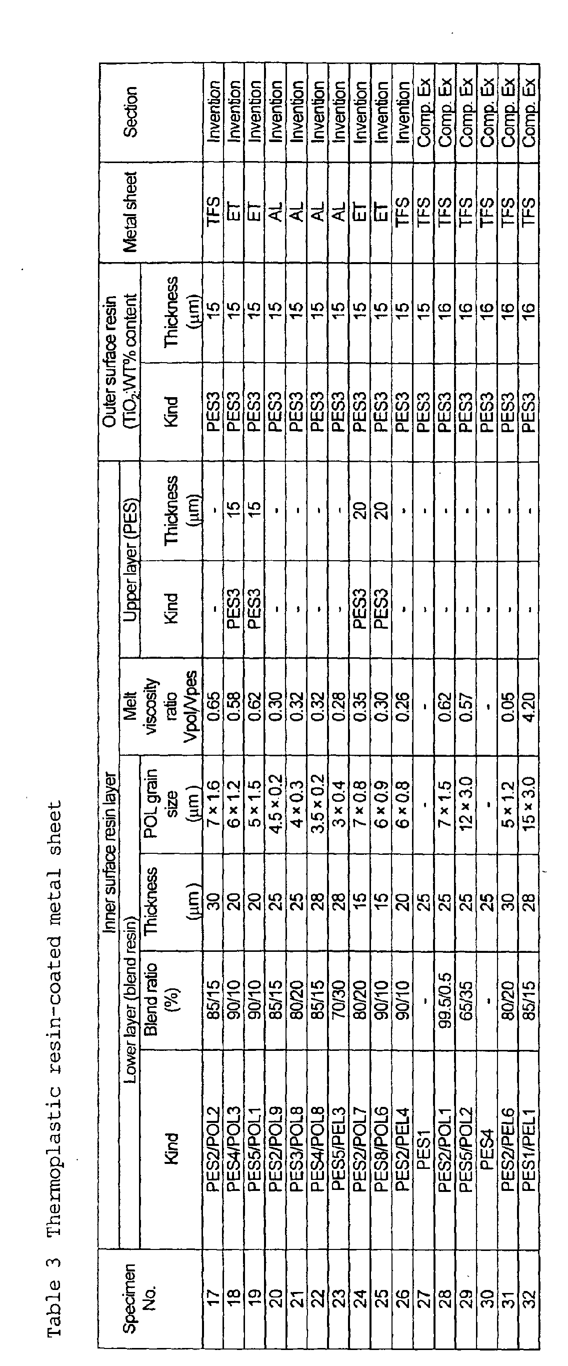

The thermoplastic resin-coated metal sheet obtained as described above was formed into a can of a bottomed cylindrical shape by using a thickness-reducing drawing and ironing as described below.

After punching a thermoplastic resin-coated metal sheet into a blank of 160 mm diameter, a drawn can with 100 mm can bottom diameter was formed such that the white polyester resin-coated surface was on the outer surface of the can. Then, it was re-drawn into a re-drawn can with 80 mm can bottom diameter. Further, the re-drawn can was applied with stretching and, at the same time, ironing by composite fabrication to form a drawn and ironed can with 65 mm can bottom diameter. The composite fabrication was conducted under the conditions that the distance between the re-drawn portion and the upper end of the can was 20 mm, the R portion at the shoulder of a re-drawing dice was 1.5 times the sheet thickness, a clearance between the re-drawing dice and a punch was 1.0 times the sheet thickness and the clearance at the ironed portion was 50% of the original thickness. Then, an upper portion of the can was trimmed by a known method and applied with neck-in fabrication and flange fabrication.

Then, methods of evaluating the thermoplastic resin and the thermoplastic resin-coated metal sheet are to be explained.

### (Size of polyolefin resin dispersed in polyester resin)

A Blend resin layer of the thermoplastic resin-coated metal sheet was observed under a scanning type electron microscope to measure the size of the fibrous resin. The measured value shows an average value measured at three time points, that is, during coating or during film preparation, completion of coating or five min before completion of film preparation, at three positions, that is, 5 cm from both ends and at the central portion in view of the lateral direction of the resin-coated metal sheet. In Tables 2 and 3, it is represented by "length in the resin extruding direction" (µm) x "length in the direction perpendicular to resin extruding direction" (µm).

### (Appearance for the can inner surface)

The can inner surface formed by the thickness-reducing drawing and ironing fabrication method was observed with naked eyes, and presence or absence of fibrous unevenness of the polyolefin resin in the resin layer and the transparency of the resin layer were evaluated by the following standards.
○ : no fibrous unevenness was observed and it had sufficient
transparency
Δ: fibrous unevenness was observed slightly, or slight clouding of the resin layer was observed
×: fibrous unevenness is observed, clouding of the resin layer was observed.

### (Melt flow rate of polyolefin elastomer)

Melt flow rate (230°C) was measured by a customary method.

### (Thickness of resin film)

The thermoplastic resin-coated metal sheet was buried in an epoxy type embedding resin, sliced to a thickness of 5 µm and the cross section was measured by microscopic observation.

### (Intrinsic viscosity (IV value))

After dissolving the polyester resin in a 1:1 mixed solution of phenol/tetrachloroethane, the specific viscosity was measured in a thermostable bath at 30°C by a Ubbelohde's viscometer to determine an intrinsic viscosity.

### (Melt viscosity)

The melt viscosity was determined by a capillary rheometer according to JIS K 7199.

### (Fabricability)

Can formed by using a thickness-reducing drawing and ironing method was observed with naked eyes and the fabricability was evaluated based on the following standards.
ⓞ: fine crack or film breakage was not recognized
○: slight fine crack to an extent not causing practical problems was recognized
Δ: crack and film breakage to an extent causing practical problem was recognized
×: broken upon forming

### (Impact resistance at low temperature)

After forming by using the thickness-reducing drawing and ironing method, trimming an upper portion of a can, and applying necking-in and flange fabrication, acidic drinks (Acerola drink, trade name of products: manufactured by Nichirei Co.) at pH 2.6 were filled, aged at 37°C for one month and then seal was opened. The can was cut out from the upper end thereof in a circumferential direction at a width of 30 mm to form a specimen. After immersing the specimen in iced water for 5 min, it was taken out and a steel rod attached with steel balls each of 1/2 inch diameter at the top end at 15 mm distance in the circumferential direction (weight: 1 kg) was dropped from the height of 40 mm, a sponge impregnated with an aqueous 3% sodium chloride solution was abutted against generated convex portions on the can inner surface, a DC current at 6.3 V was applied to the specimen, the value of the flowing current was measured and the impact resistance at low temperature was measured by the following standards depending on the magnitude of the measured current value.
ⓞ: less than 0.05 mA
○: 0.05 mA or more and less than 0.1 mA
Δ: 0.1 mA or more and less than 0.3 mA
×: 0.3 mA or more

### (Corrosion resistance)

After forming by using a thickness-reducing drawing and ironing method, an upper portion of a can was trimmed and applied with neck-in and flange fabrication. Then after filling acidic drinks (Acelora drink, trade name of products: manufactured by Nichirei Co.), impact was applied at a low temperature from the outside of the can to the wall of the can in the same manner as practiced in the evaluation of the impact resistance at low temperature to form a concave portion. Then, after aging at 37°C for one month, seal was opened and concentration of leached metal was measured by atomic absorption spectroscopy and the corrosion resistance was evaluated in accordance with the following standards depending on the concentration.
ⓞ: less than 0.3 ppm,
○: more than 0.3 ppm and less than 0.5 ppm,
Δ: more than 0.5 ppm and less than 1.0 ppm,
×: 1.0 ppm or more

The result of evaluation was shown in Tables 4 and 5.

As shown in Table 4 and Table 5, it can be seen that any of the thermoplastic resin-coated metal sheets of the present invention is excellent in the fabricability and shows favorable impact resistance at low temperature and corrosion resistance.

**Table 4**

| Result of characteristic evaluation | | | | | |
|---|---|---|---|---|---|
| Specimen No. | Result of characteristic evaluation | | | | Section |
| | Fabricability | Impact resistance at low temperature | Corrosion resistance | Resin unevenness | |
| 1 | ⓞ | ⓞ | ⓞ | ○ | Invention |
| 2 | ⓞ | ⓞ | ⓞ | ○ | Invention |
| 3 | ⓞ | ⓞ | ⓞ | ○ | Invention |
| 4 | ⓞ | ○ | ○ | ○ | Invention |
| 5 | ⓞ | ○ | ⓞ | ○ | Invention |
| 6 | ⓞ | × | ○ | × | Comp. Ex |
| 7 | ⓞ | ⓞ | ⓞ | ○ | Invention |
| 8 | ⓞ | ○ | ⓞ | ○ | Invention |
| 9 | ⓞ | ⓞ | ⓞ | ○ | Invention |
| 10 | ⓞ | ⓞ | ⓞ | ○ | Invention |
| 11 | ⓞ | ⓞ | ⓞ | □ | Invention |
| 12 | ⓞ | ○ | ○ | ○ | Invention |
| 13 | ⓞ | ⓞ | ⓞ | ○ | Invention |
| 14 | ⓞ | ⓞ | ⓞ | ○ | Invention |
| 15 | ⓞ | ○ | ○ | ○ | Invention |
| 16 | ⓞ | ⓞ | ○ | ○ | Invention |

**Table 5**

| Result of characteristic evaluation | | | | | |
|---|---|---|---|---|---|
| Specimen No. | Result of characteristic evaluation | | | | Section |
| | Fabricability | Impact resistance at low temperature | Corrosion resistance | Resin unevenness | |
| 17 | ⓞ | ⓞ | ○ | ○ | Invention |
| 18 | ⓞ | ⓞ | ⓞ | ○ | Invention |
| 19 | ⓞ | ⓞ | ⓞ | ○ | Invention |
| 20 | ⓞ | ⓞ | ⓞ | ○ | Invention |
| 21 | ⓞ | ⓞ | ⓞ | ○ | Invention |
| 22 | ⓞ | ⓞ | ⓞ | ○ | Invention |
| 23 | ○ | ○ | ○ | ○ | Invention |
| 24 | ⓞ | ⓞ | ⓞ | ○ | Invention |
| 25 | ⓞ | ⓞ | ⓞ | ○ | Invention |
| 26 | ⓞ | ⓞ | ⓞ | ○ | Invention |
| 27 | ⓞ | × | Δ | ○ | Comp. Ex |
| 28 | ⓞ | × | Δ | ○ | Comp. Ex |
| 29 | ○ | Δ | ○ | Δ | Comp. Ex |
| 30 | ⓞ | × | Δ | ○ | Comp. Ex |
| 31 | ⓞ | × | Δ | ○ | Comp. Ex |
| 32 | ○ | × | Δ | Δ | Comp. Ex |

### Example 2

### (Specimen Nos. 33 - 38, 43 - 53)

A long strip-like electrolytic chromic acid treated steel sheet (TFS) was re-wound from an uncoiler at a rate of 150 m/min and heated, and pellets of the polyester resin (PES), the polyolefin resin (POL) and/or polyolefin elastomer (PEL) or only of the polyester resin shown in Table 6 were heat melted at a temperature higher by about 30°C than the melting point of the polyester resin while varying the kneading time by using an extruder to form a blend resin, fed to a T-die and extruded on one surface of TFS to be an inner surface of a can (inner surface). Simultaneously, pellets of the polyester resin incorporated with 20% by weight of white titanium dioxide shown in Tables 7 and 8 were heat melted at a temperature higher by about 30°C than the melting point of the polyester resin by using an extruder, then fed into a T-die and extruded on the other surface of the heated TFS to be an outer surface of the can (outer surface) from the die nozzle. Then, a pair of press bonding rolls were used and after sandwiching TFS having resin layers extruded on both surfaces thereof, it was quenched directly in water to prepare thermoplastic resin-coated metal sheets of Specimens Nos. 33 - 38, 43 - 53 in Table 7 and Table 8.

### (Specimen Nos. 39 - 42)

A long strip-like tin sheet (ET) was re-wound from an uncoiler at a rate of 150 m/min and heated, and pellets of the polyester resin and the polyolefin resin shown in Table 6 were heat melted at a temperature higher by about 30°C than the melting point of the polyester resin while varying the kneading time by using extruder to form a blend resin, the polyester resin shown in Table 6 was heat melted at a temperature higher by about 30°C than the melting point of the polyester resin by using a separate extruder, fed to a T-die having two die nozzles, and coextruded on one surface of a tin sheet to be an inner surface of a can from the die nozzles such that the blend resin layer containing the polyolefin resin was in contact with the tin sheet. Simultaneously, pellets of the polyester resin incorporated with 20% by weight of white titanium dioxide shown in Table 7 were heat melted at a temperature higher by about 30°C than the melting point of the polyester resin by using an extruder, fed into a T-die and extruded on the other surface of the heated tin sheet to be an outer surface of the can from a die nozzle. Then, a pair of press bonding rolls were used and after sandwiching the tin sheet having resin layers extruded on both surfaces, it was quenched directly in water to prepare thermoplastic resin-coated metal sheets of Specimen Nos. 39 - 42 in Table 7.

### (Specimen Nos. 54 - 58)

Pellets of the polyester resin and the polyolefin resin or the polyolefin elastomer shown in Table 6 were heat melted at a temperature higher by about 30°C than the melting point of the polyester resin while varying kneading time by using an extruder to form a blend resin, then fed to a T-die, extruded from a die nozzle, followed by trimming and taken up as a non-orientation film to a coiler. Further, pellets of the polyester resin incorporated with 20% by weight of white titanium dioxide shown in Table 8 were heat melted at a temperature higher by about 30°C than the melting point of the polyester resin by using an extruder, fed into a T-die, extruded from a die nozzle, followed by trimming and was taken up as a non-orientation film to an uncoiler. Then, a long strip-like aluminum alloy sheet (AL) was re-wound at a rate of 150 m/min from the uncoiler and the blend resin film was abutted while rewinding from the coiler to one surface thereof to be the inner surface of a can and, simultaneously, white polyester film was abutted while being re-wound from the coiler against the other surface to be the outer surface of the can. Then, a pair of press bonding rolls were used and after sandwiching the aluminum alloy sheet having resin layers extruded on both surfaces, it was quenched directly in water to prepare thermoplastic resin-coated metal sheets of Specimen Nos. 54 - 58 in Table 8.

### (Specimen Nos. 59 - 61)

Pellets of the polyester resin and the polyolefin resin and/or the polyolefin elastomer shown in Table 9 were heat melted at a temperature higher by about 30°C than the melting point of the polyester resin while varying the kneading time by using an extruder to form a blend resin, pellets of the polyester (PES4) in Table 6 were heat melted to a temperature higher by about 30°C than the melting point of the respective polyester resins by using separate extruders respectively, then fed to a die having two nozzles, co-extruded from the die nozzles such that the upper layer comprised of PES4 and the lower layer comprised of the blend resin, followed by trimming and then taken up to a coiler as a two-layered non-orientation film. Further, pellets of the polyester resin incorporated with 20% by weight of white titanium dioxide shown in Table 9 were heat melted at a temperature higher by about 30°C than the melting point of the polyester resin by using an extruder, fed to a T-die, extruded from a die nozzle, followed by trimming and taken up as a non-orientation film to a coiler. Then, a long strip-like TFS was re-wound from an uncoiler at a rate of 150 m/min and heated, and the two-layered resin film was abutted while being re-wound from the coiler to one surface to be an inner surface of a can and, at the same time, the white polyester film was abutted while being re-wound from the coiler against the other surface to be an outer surface of the can. Then, after sandwiching the TFS having resin layers extruded on both surfaces by using a pair of press bonding rolls, it was quenched directly in water to prepare thermoplastic resin-coated metal sheets of Specimen Nos. 59 - 61 in Table 9.

### (Specimen Nos. 62 - 64)

Pellets of the polyester resin and the polyolefin resin and/or the polyolefin elastomer shown in Table 10 were heat melted at a temperature higher by about 30°C than the melting point of the polyester resin while varying the kneading time by using an extruder to form a blend resin, pellets of the polyester PES4 and PES6 in Table 6 were heat melted to a temperature higher by about 30°C than the melting point of the respective polyester resins by using separated extruders respectively, then fed to a die having three nozzles, co-extruded from the die nozzles such that the upper layer comprised of PES4, the intermediate layer comprised of the blend resin, and the lower layer comprised of the PES6, followed by trimming and then taken up to a coiler as a three-layered non-orientation film. Further, pellets of the polyester resin incorporated with 20% by weight of white titanium dioxide shown in Table 9 were heat melted at a temperature higher by about 30°C than the melting point of the polyester resin by using an extruder, fed to a T-die, extruded from die nozzle, followed by trimming and taken up as a non-orientation film to a coiler. Then, a long strip-like TFS was re-wound from an uncoiler at a rate of 150 m/min and heated, and the three-layered resin film was abutted while being re-wound from the coiler to one surface to be an inner surface of a can and, at the same time, the white polyester film was abutted while being re-wound from the coiler against the other surface to be an outer surface of the can. Then, after sandwiching the TFS having resin layers extruded on both surfaces by using a pair of press bonding rolls, it was quenched directly in water to prepare thermoplastic resin-coated metal sheets of Specimen Nos. 62 - 64 in Table 10.

In Tables 7 - 10, the outer surface resin layer contains 20% by weight of TiO₂ as a white pigment.

**Table 6**

| Resin composition | |
|---|---|
| Resin No. | Resin Composition |
| PES1 | Polyethylene terephthalate (IV value: 0.75) |
| PES2 | Polyethylene terephthalate (IV value: 0.82) |
| PES3 | Polyethylene terephthalate (IV value: 1.1) |
| PES4 | Ethylene terephthalate /ethylene isophthalate copolymer (ethylene -isophthalate:: 5 mol%) (IV value: 0.9) |
| PES5 | Ethylene terephthalate /ethylene isophthalate copolymer (ethylene isophthalate:: 10 mol%) (IV value: 0.9) |
| PES6 | Ethylene terephthalate /ethylene isophthalate copolymer (ethylene isophthalate:: 15 mol%) (IV value: 1.5) |
| PES7 | Ethylene terephthalate /ethylene adipate copolymer (ethylene adipate:: 10 mol%) (IV value: 0.5) |
| PES8 | Ethylene terephthalate - ethylene naphthalate copolymer (ethylene -naphthalate: 10 mol%) (IV value :0.9) |
| PES9 | Polybutylene terephthalate (IV value: 1.35) |
| POL1 | Polyethylene |
| POL2 | Polypropylene |
| POL3 | Polybutene-1 |
| POL4 | Polyoctene-1 |
| POL5 | Ethylene-propylene copolymer |
| POL6 | Ethylene-butene-1 copolymer |
| POL7 | Ethylene-hexene copolymer |
| PEL1 | Ethylene/propylene polymerized elastomer (MFR: 0.45 g/10 min) |
| PEL2 | Ethylene/propylene polymerized elastomer (MFR: 0.8 g/10 min) |
| PEL3 | Ethylene/propylene polymerized elastomer (MFR: 6 g/10 min) |
| PEL4 | Ethylene/propylene polymerized elastomer (MFR: 12 g/10 min) |
| PEL5 | Ethylene/propylene polymerized elastomer (MFR: 25 g/10 min) |
| PEL6 | Ethylene/propylene polymerized elastomer (MFR: 30 g/10 min) |

**Table 7**

| Thermoplastic resin-coated metal sheet | | | | | | | |
|---|---|---|---|---|---|---|---|
| Specimen No | Inner surface resin layer | | | Outer surface resin layer | | Metal sheet | Section |
| No . | Type | Blend ratio (wt%) | Thick ness (µm) | Type | Thickness (µm) | | |
| 33 | PES4/PES9/POL5 | 30/50/20 | 25 | PES4 | 15 | TFS | Invention |
| 34 | PES5/PES9/POL5 | 50/47/3 | 25 | PES4 | 15 | TFS | Comp. Ex |
| 35 | PES5/PES9/POL5 | 50/45/5 | 25 | PES4 | 15 | TFS | Invention |
| 36 | PES5/PES9/POL5 | 30/50/20 | 25 | PES4 | 15 | TFS | Invention |
| 37 | PES5/PES9/POL5 | 25/50/30 | 25 | PES4 | 15 | TFS | Invention |
| 38 | PES5/PES9/POL5 | 20/45/35 | 25 | PES4 | 15 | TFS | Comp. Ex |
| 39 | PES6/PES9/POL5 | 30/50/20 | 25 | PES4 | 15 | ET | Invention |
| 40 | PES6/PES9/POL 1/POL5 | 30/50/10/10 | 25 | PES4 | 15 | ET | Invention |
| 41 | PES6/PES9/PEL3 | 30/50/20 | 25 | PES4 | 15 | ET | Invention |
| 42 | PES6/PES9/POL5/PEL3 | 30/50/10/10 | 25 | PES4 | 15 | ET | Invention |
| 43 | PES4/POL5 | 80/20 | 25 | PES4 | 15 | TFS | Invention |
| 44 | PES5/PES9/POL2 | 30/50/20 | 25 | PES4 | 15 | TFS | Invention |
| 45 | PES5/PES9/POL3 | 50/30/20 | 25 | PES4 | 15 | TFS | Invention |
| 46 | PES5/PES9/POL4 | 30/50/20 | 25 | PES4 | 15 | TFS | Invention |

**Table 8**

| Thermoplastic resin-coated metal sheet | | | | | | | |
|---|---|---|---|---|---|---|---|
| Specimen | Inner surface resin layer | | | Outer surface resin layer | | Metal sheet | Section |
| No | Type | Blend ratio (wt%) | Thickness (µm) | Type | Thickness (µm) | | |
| 47 | PES5/PES9/POL6 | 30/50/20 | 25 | PES4 | 15 | TFS | invention |
| 48 | PES5/PES9/POL7 | 30/50120 | 25 | PES4 | 15 | TFS | Invention |
| 49 | PES5/PES9/PEL1 | 30/50120 | 25 | PES4 | 15 | TFS | Comp.ex |
| 50 | PES5/PES9/PEL2 | 30/50/20 | 25 | PES4 | 15 | TFS | Invention |
| 51 | PES5/PES9/PEL4 | 30/50/20 | 25 | PES4 | 15 | TFS | Invention |
| 52 | PES5/PES9/PEL5 | 30/50/20 | 25 | PES4 | 15 | TFS | Invention |
| 53 | PES5/PES9/PEL6 | 30/50/20 | 25 | PES4 | 15 | TFS | Comp.ex |
| 54 | PES1/PES9/PEL5 | 30/50/20 | 25 | PES4 | 15 | AL | Invention |
| 55 | PES2/PES9/POL1/PEL4 | 30/50/10/10 | 25 | PES4 | 15 | AL | Invention |
| 56 | PES3/PES9/POL5/PEL4 | 30/50/5/15 | 25 | PES4 | 15 | AL | Invention |
| 57 | PES7/PES9/POL5/PEL5 | 30/50/10/10 | 25 | PES4 | 15 | AL | Invention |
| 58 | PES8/PES9/POL6/PEL3 | 30/50/10/10 | 25 | PES4 | 15 | AL | Invention |

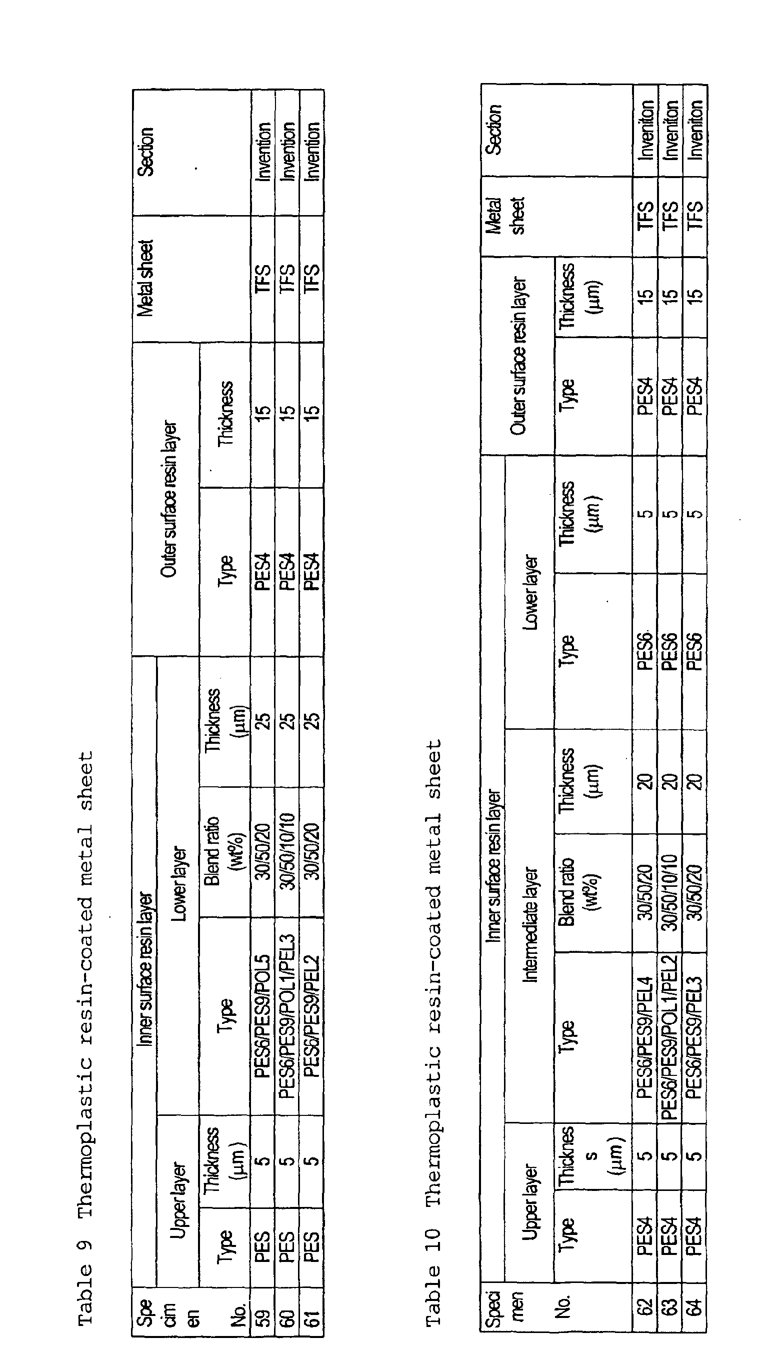

**Table 11**

| Result of characteristic evaluation | | | | |
|---|---|---|---|---|
| Specimen | Result of characteristic evaluation | | | Section |
| No. | Fabricability | Low temperature impact resistance | Corrosion resistance | |
| 33 | ⓞ | ⓞ | ⓞ | Invention |
| 34 | ○ | × | Δ | Comp.Ex |
| 35 | ⓞ | ⓞ | ⓞ | Invention |
| 36 | ⓞ | ⓞ | ⓞ | Invention |
| 37 | ⓞ | ⓞ | ⓞ | Invention |
| 38 | ⓞ | × | Δ | Comp. Ex |
| 39 | ⓞ | ⓞ | ⓞ | Invention |
| 40 | ⓞ | ⓞ | ⓞ | Invention |
| 41 | ⓞ | ⓞ | ⓞ | Invention |
| 42 | ⓞ | ⓞ | ⓞ | Invention |
| 43 | ⓞ | ○ | ○ | Invention |
| 44 | ⓞ | ⓞ | ⓞ | Invention |
| 45 | ⓞ | ⓞ | ⓞ | Invention |
| 46 | ⓞ | ⓞ | ⓞ | Invention |
| 47 | ⓞ | ⓞ | ⓞ | Invention |
| 48 | ⓞ | ⓞ | ⓞ | Invention |

**Table 12**

| Result of characteristic evaluation | | | | |
|---|---|---|---|---|
| Speci men | Result of characteristic evaluation | | | Section |
| No. | Fabricability | Low temperature impact resistance | Corrosion resistance | |
| 49 | Δ | × | ○ | Comp.Ex |
| 50 | ⓞ | ⓞ | ⓞ | Invention |
| 51 | ⓞ | ⓞ | ⓞ | Invention |
| 52 | ⓞ | ○ | ○ | Invention |
| 53 | ⓞ | × | Δ | Comp.Ex |
| 54 | ⓞ | ⓞ | ⓞ | Invention |
| 55 | ⓞ | ⓞ | ⓞ | Invention |
| 56 | ⓞ | ⓞ | ⓞ | Invention |
| 57 | ⓞ | ⓞ | ⓞ | Invention |
| 58 | ⓞ | ⓞ | ⓞ | Invention |
| 59 | ⓞ | ⓞ | ⓞ | Invention |
| 60 | ⓞ | ⓞ | ⓞ | Invention |
| 61 | ⓞ | ⓞ | ⓞ | Invention |
| 62 | ⓞ | ⓞ | ⓞ | Invention |
| 63 | ⓞ | ⓞ | ⓞ | Invention |
| 64 | ⓞ | ⓞ | ⓞ | Invention |

Further, the three types of the metal sheets described above were identical with those used in Experiment Example 1 and any of the polyolefin resins used was synthesized by means of metallocene catalyst.

Cans each of a bottomed cylindrical shape were formed using the thermoplastic resin-coated metal sheets obtained above in the same manner as in Experiment Example 1 and thermoplastic resin coating and the thermoplastic resin-coated metal sheet were evaluated in the same manner as in Experimental Example 1 and the results are shown in Table 11 and Table 12.

As shown in Table 11 and Table 12, it can be seen that any of the thermoplastic resin-coated metal sheets according to the present invention is excellent in the fabricability and shows favorable impact resistance at low temperature and corrosion resistance.

### Industrial Applicability

The present invention provides a thermoplastic resin-coated metal sheet in which a coating layer of a thermoplastic resin composition comprising a blend a polyester resin and at least one of polyolefin ingredients selected from the group consisting of polyolefin resins and polyolefin elastomers is formed on at least one surface of a metal sheet, and a can formed obtained by forming the same, the thermoplastic resin-coated metal sheet described above is excellent in the workability, and shows excellent workability causing no crackings and peeling to the resin layer even after being applied with severe forming such as thickness-reducing drawing or thickness-reducing drawing and ironing. Further, it shows excellent impact resistance at low temperature with no occurrence of cracks in the resin layer even when applied with impact at low temperature and, further, leaches less metals when the formed can is left for a long time while being filled with acidic contents and shows excellent corrosion resistance.

## Claims

1. A thermoplastic resin-coated metal sheet in which a thermoplastic resin composition comprising a blend of one or more of polyester resins and a polyolefin ingredient comprising at least one member selected from the group consisting of polyolefin resins and polyolefin elastomers is coated in a substantially non-orientation state on at least one surface of a metal sheet.

2. A thermoplastic resin-coated metal sheet according to claim 1, wherein a polyolefin resin is used as the polyolefin ingredient.

3. A thermoplastic resin-coated metal sheet according to claim 1, wherein a polyolefin elastomer is used as the polyolefin ingredient.

4. A thermoplastic resin-coated metal sheet according to claim 1, wherein a polyolefin resin and a polyolefin elastomer are used as the polyolefin ingredient.

5. A thermoplastic resin-coated metal sheet according to any one of claims 1 to 4, wherein the ratio of a melt index of the polyolefin ingredient upon heat melting (VPOL) to that of the polyester resin upon heat melting (VPES), that is, VPOL/VPES is 1.2 or less in the thermoplastic resin composition.

6. A thermoplastic resin-coated metal sheet according to any one of claims 1 to 5, wherein a polyester resin layer formed by coating the polyester resin in a substantially non-orientation state is formed on the coating layer of the thermoplastic resin composition.

7. A thermoplastic resin-coated metal sheet according to any one of claims 1 to 6, wherein a polyester resin layer coating the polyester resin in a substantially non orientation state is formed on the surface of the metal sheet, and the coating layer of the thermoplastic resin composition is formed on the polyester resin layer.

8. A thermoplastic resin-coated metal sheet according to any one of claims 1 to 2, and 4 to 7, wherein the polyolefin resin is a resin comprising one or more of 1-alkene polymer resins having a number or carbon atoms of 2 to 8.

9. A thermoplastic resin-coated metal sheet according to claim 8, wherein the 1-alkene polymer resin is one of polyethylene, polypropylene, and an ethylene-propylene copolymer.

10. A thermoplastic resin-coated metal sheet according to claim 8 or 9, wherein the polyolefin resin is a polyolefin resin polymerized by means of a metallocene catalyst.

11. A thermoplastic resin-coated metal sheet according to claim 1, wherein at least a portion of the polyolefin resin is a modified polyolefin resin modified with one of maleic acid anhydride, acrylic acid, acrylic acid ester and diglycidyl methacrylate.

12. A thermoplastic resin-coated metal sheet according to any one of claims 1, 3 and 4, wherein the polyolefin elastomer is an in-plant produced ethylene-propylene copolymerized elastomer having a melt flow rate (MFR, 230°C) of 0.4 to 30 g/10 min).

13. A thermoplastic resin-coated metal sheet according to any one of claims 1 to 12, wherein the polyester resin in the thermoplastic resin composition is a polyester resin comprising ester repetitive units of at least one of ethylene terephthalate, ethylene isophthalate, ethylene naphthalate, ethylene adipate, butylenes terephthalate, butylene isophthalate, butylene naphthalate and butylene adipate, and the intrinsic viscosity is from 0.5 to 1.5.

14. A thermoplastic resin-coated metal sheet according to claim 13, wherein the polyester resin in the thermoplastic resin composition is an ethylene terephthalate/ethylene isophthalate copolymer or polybutylene terephthalate.

15. A thermoplastic resin-coated metal sheet according to claim 6 or 7, wherein the polyester resin in the polyester resin layer of the upper layer or the lower layer in the coating layer of the thermoplastic resin composition is an ethylene terephthalate/ethylene isophthalate copolymer.

16. A thermoplastic resin-coated metal sheet according to any one of claims 1 to 15, wherein the thermoplastic resin composition contains 1 to 30% by weight of a polyolefin ingredient.

17. A thermoplastic resin-coated metal sheet according to any one of claims 1 to 16, wherein the thermoplastic resin composition contains 70 to 95% by weight of the polyester resin.

18. A thermoplastic resin-coated metal sheet according to any one of claims 1 to 17, wherein the thermoplastic resin composition is heat melted and directly extruded from a T-die to a metal sheet for coating.

19. A thermoplastic resin-coated metal sheet according to any one of claims 1 to 17, wherein the thermoplastic resin composition is heat melted, extruded from a T-die onto a casting roll, cooled to solidify into a film and then the film is hot press bonded on a metal sheet.

20. A thermoplastic resin-coated metal sheet according to claims 18 or 19, wherein, wherein the polyolefin ingredient in the coating layer comprising a thermoplastic resin composition is present being dispersed with a size of 1 to 10 µm in the extruding direction and 0.1 to 2 µm in the direction perpendicular to the extruding direction.

21. A thermoplastic resin-coated metal sheet according to any one of claims 1 to 20, wherein the metal sheet is one of electrolytic chromic acid treated steel sheet, tin-plated sheet and aluminum alloy sheet.

22. A can using a thermoplastic resin-coated metal sheet according to any one of claims 1 to 21.
